# EUROPEAN PATENT APPLICATION

(11) **EP 4 383 284 A1**
(43) Date of publication of application: **12.06.2024**
(21) Application number: 22852558.0
(22) Date of filing: 08.03.2022
(51) Int. Cl.: H01F 3/06, H02K 15/02, H02K 24/00, H01F 41/02, H01F 27/24, H02K 1/00, H02K 1/02, H02K 1/06

(54) **CORE AND METHOD FOR PRODUCING CORE**

(30) Priority: 06.08.2021 JP 2021130281
(71) Applicant: Matsuo Industries, Inc., Nagoya-shi, Aichi 457-0831 (JP)
(72) Inventor: SEKITOMI, Yuji, Obu City, Aichi 474-0001 (JP); YAMASHITA, Shigetoshi, Obu City, Aichi 474-0001 (JP); YOSHIDA, Shigeyoshi, Sendai-shi, Miyagi 980-8577 (JP)
(74) Representative: Hoffmann Eitle
(86) International application number: PCT/JP2022/009836
(87) International publication number: WO 2023/013129

(57) **Abstract**

A method for producing a core (2) according to the present disclosure is a method for producing the core (2) to be used in a manner of arranging a plurality of the cores (2) in an annular shape. The method includes: bending a linear material (1) that is a magnetic material; forming the linear material (1) into a design shape; and cutting an excess of the linear material (1) when there is the excess.

## Description

### TECHNICAL FIELD

The present disclosed technique relates to a core and a method for producing the core.

### BACKGROUND ART

A core is a component used in a motor, a magnetic circuit, a magnetic sensor, or the like, and is used in various industries. The core is also called an iron core, and functions as a path of a magnetic flux.

Since the core is a path of a magnetic flux, an eddy current is generated when the core is used. A technique of manufacturing a core from a bundle of a plurality of wire materials in order to suppress generation of an eddy current is known. For example, Patent Literature 1 discloses an ignition coil core manufactured by inserting a plurality of wire materials into a metal pipe.

### CITATION LIST

### PATENT LITERATURE

Patent Literature 1: JP 2018-148119 A

### SUMMARY OF INVENTION

### TECHNICAL PROBLEM

As long as the core is substantially pipe-shaped like an ignition coil, a manufacturing method exemplified in Patent Literature 1 can be applied. However, the shape of the core required in design varies, and the manufacturing method exemplified in Patent Literature 1 cannot be applied in some cases.

In view of the above problem, an object of the present disclosed technique is to provide a method for producing a core that can be designed into various shapes.

### SOLUTION TO PROBLEM

A method for producing a core according to the present disclosure is a method for producing a core to be used in a manner of arranging a plurality of the cores in an annular shape. The method includes: bending a linear material that is a magnetic material; forming the linear material into a design shape; and cutting an excess of the linear material when there is the excess.

### ADVANTAGEOUS EFFECTS OF INVENTION

Since the method for producing a core according to the present disclosed technique includes the above steps, a core can be designed into various shapes.

### BRIEF DESCRIPTION OF DRAWINGS

FIG. 1 is a flowchart illustrating processing steps of a method for producing a core according to a first embodiment.
FIG. 2 is a schematic diagram illustrating an example of a shape of a core according to the first embodiment.
FIG. 3 is a schematic diagram illustrating an example of a design shape according to the first embodiment.
FIG. 4A is a schematic diagram No. 1 illustrating an example in which a linear material 1 is formed into a design shape. FIG. 4B is a schematic diagram No. 2 illustrating an example in which the linear material 1 is formed into a design shape. FIG. 4C is a schematic diagram No. 3 illustrating an example in which the linear material 1 is formed into a design shape.
FIG. 5 is a schematic diagram illustrating an example in which the linear materials 1 arranged in a planar manner are formed into a design shape.
FIG. 6 is a schematic diagram illustrating an example in which the three-dimensionally bundled linear materials 1 are formed into a design shape.
FIG. 7A is an example of a graph comparing an output voltage of a rotary device according to a conventional technique and an output voltage of a rotary device according to the present disclosed technique. FIG. 7B is an example of a graph comparing an impedance of the rotary device according to the conventional technique and an impedance of the rotary device according to the present disclosed technique.
FIG. 8 is a diagram for explaining a wire drawing step in a method for producing a core according to a second embodiment.
FIG. 9 is an explanatory diagram illustrating a change in a cross-sectional shape of a linear material 1 before and after the wire drawing step in the method for producing a core according to the second embodiment.

### DESCRIPTION OF EMBODIMENTS

A method for producing a core 2 according to the present disclosed technique will be apparent from the following description along the drawings for each embodiment.

### First embodiment.

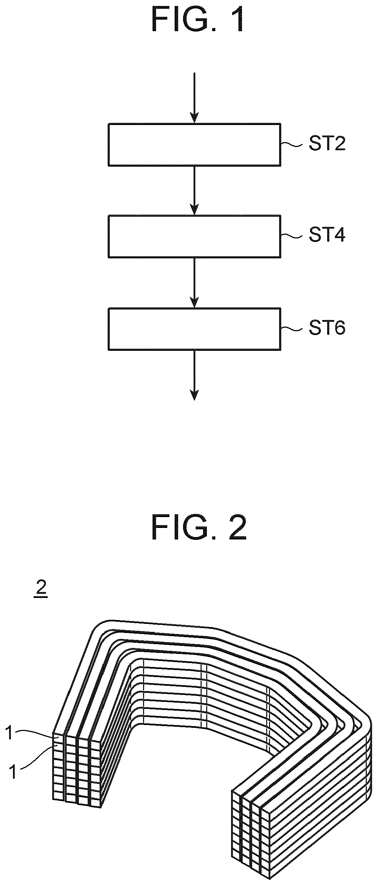

FIG. 1 is a flowchart illustrating processing steps of a method for producing a core 2 according to a first embodiment. As illustrated in FIG. 1, the method for producing the core 2 according to the first embodiment includes: a step (ST2) of bending a linear material 1 that is a magnetic material; a step (ST4) of forming the linear material 1 into a design shape; and a step (ST6) of cutting an excess of the linear material 1.

A cross-sectional shape of the linear material 1 that is a magnetic material is not particularly limited. That is, the cross-sectional shape of the linear material 1 that is a magnetic material may be a circle, a quadrangle, or another shape.

Silicon may be added to the linear material 1 that is a magnetic material by a chemical vapor deposition (CVD) method.

FIG. 2 is a schematic diagram illustrating an example of the shape of the core 2 according to the first embodiment. FIG. 2 illustrates a case where a cross-sectional shape of the linear material 1 is a quadrangle. As illustrated in FIG. 2, since the core 2 is formed by stacking the linear material 1, the core 2 can correspond to various shapes, and can also be used for a rotary device such as a high-output motor.

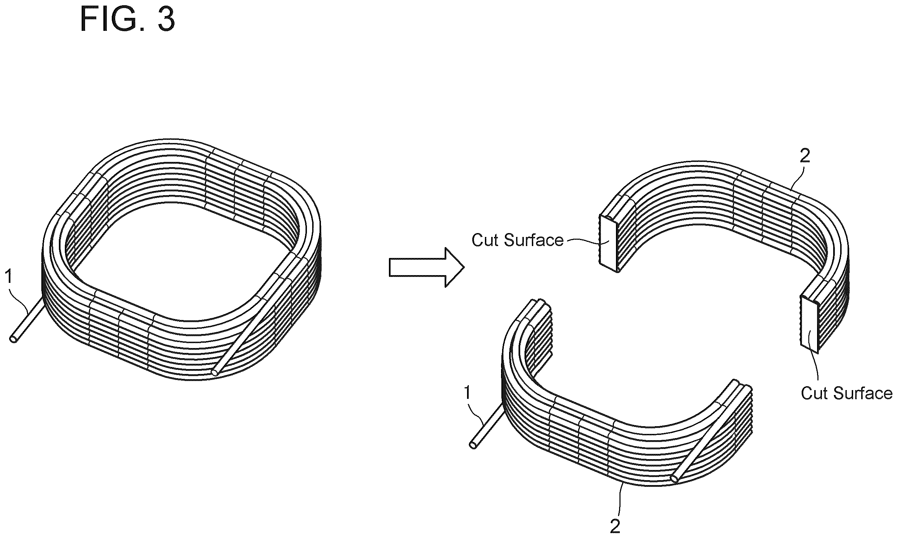

FIG. 3 is a schematic diagram illustrating an example of a design shape according to the first embodiment. The shape illustrated on the left side of FIG. 3 is the design shape. FIG. 3 illustrates an example in which two cores 2 face each other and are connected to each other in an annular shape. The design shape is a shape including the shape of at least one core 2. The right side of FIG. 3 illustrates an example in which two cores 2 are produced by cutting the linear material 1 bent into the design shape into two. Although the design shape illustrated in FIG. 3 is annular, the method for producing the core 2 according to the present disclosed technique is not limited thereto. For example, the design shape may be a shape obtained by connecting a plurality of the cores 2 to each other in series. When the design shape includes the shapes of the plurality of cores 2, there is preferably a margin of a so-called cutting margin between the core 2 and the core 2 adjacent to each other.

The left side of FIG. 3 indicates that the design shape may be originally formed from one linear material 1. Note that, in the method for producing the core 2 according to the present disclosed technique, the number of original linear materials 1 is not limited to one. A plurality of linear materials 1 may be used for producing the core 2 from the beginning. As the linear material 1 used for producing the core 2, a plurality of types of wire materials having different thicknesses and the like may be used. For example, the linear materials 1 having different thicknesses may be used for a central portion and an outer peripheral portion of the core 2. The linear material 1 thinner than that used for the outer peripheral portion may be used for the central portion of the core 2. Furthermore, as for the linear material 1 according to the present disclosed technique, a plurality of wire materials made of different materials may be used.

It should be considered how to use the linear material 1 for the core 2 to be produced in order to suppress an eddy current.

In the step (ST2) of bending the linear material 1 that is a magnetic material and the step (ST4) of forming the linear material 1 into a design shape, the linear material 1 is preferably stacked in a direction of a magnetic flux of a magnetic circuit in which the core 2 is incorporated.

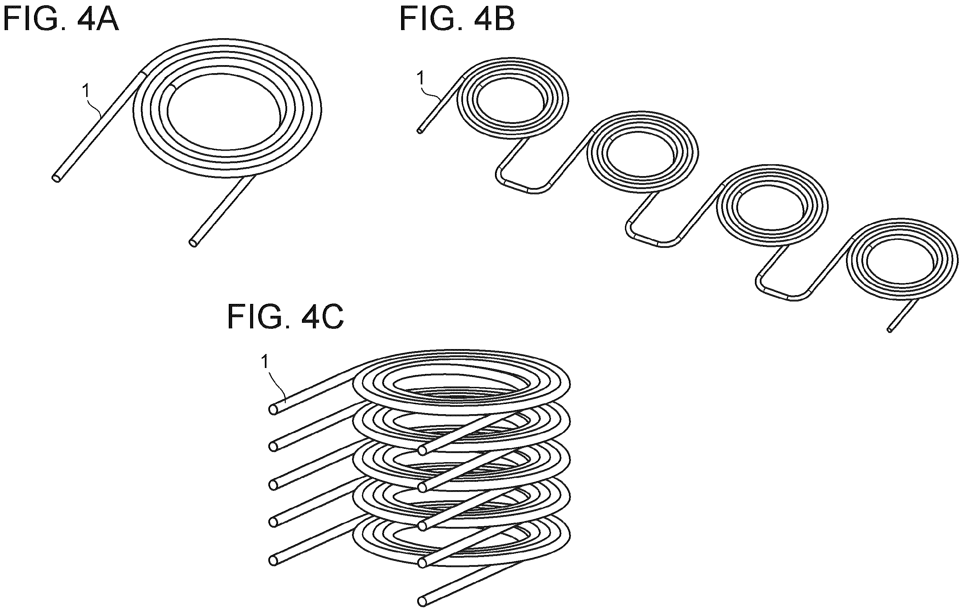

FIG. 4A is a schematic diagram No. 1 illustrating an example in which the linear material 1 is formed into a design shape. FIG. 4B is a schematic diagram No. 2 illustrating an example in which the linear material 1 is formed into a design shape. FIG. 4C is a schematic diagram No. 3 illustrating an example in which the linear material 1 is formed into a design shape.

More specifically, FIG. 4A illustrates an example in which the linear material 1 is formed into a design shape by alpha-winding the linear material 1. When the shape of the core 2 is as illustrated on the right side of FIG. 3, it is also conceivable to use existing equipment such as a winding machine that alpha-winds a wire in the step (ST4) of forming the linear material 1 into a design shape.

More specifically, FIG. 4B illustrates an example in which the linear material 1 is formed into a design shape by making a plurality of alpha windings for the linear material 1.

FIG. 4C illustrates an example in which the linear material 1 with the plurality of alpha windings obtained in FIG. 4B is formed into a design shape by stacking the linear material 1.

In order for the bent linear material 1 to maintain the design shape, a processing step for maintaining the shape is preferably performed on the bent linear material 1. As for the processing step for maintaining the shape, thermocompression bonding such as self-fusion by heating, adhesion with an adhesive, twisting a plurality of wires together, pressure welding by applying pressure, and the like are conceivable.

When the processing step for maintaining the shape uses self-fusion, a wire material coated with enamel or the like is preferably used as the linear material 1. That is, in the case of self-fusion, the linear material 1 is preferably coated with a material for self-fusion.

When the processing step for maintaining the shape uses an adhesive, this step may be performed simultaneously with the step (ST2) of bending the linear material 1 that is a magnetic material and the step (ST4) of forming the linear material 1 into a design shape. That is, in the method for producing the core 2 according to the present disclosed technique, the linear material 1 and an adhesive may be fed in a manner of a so-called three-dimensional printer, and a design shape may be formed by one-stroke writing.

The step (ST6) of cutting an excess of the linear material 1 can also be said to be, for example, a step of cutting out the core shape on the right side of FIG. 3 from the design shape on the left side of FIG. 3. Of course, when an excess of the linear material 1 is generated when the linear material 1 is formed into a design shape, cutting the excess is also included.

The number of times at which each of the step (ST2) of bending the linear material 1 that is a magnetic material, the step (ST4) of forming the linear material 1 into a design shape, and the step (ST6) of cutting an excess of the linear material 1 is performed, and order in which the step (ST2), step (ST4), and step (ST6) are performed may be appropriately determined depending on the shape of the core 2 to be produced. For example, after the step (ST6) of cutting an excess of the linear material 1, the step (ST2) of bending the linear material 1 and the step (ST4) of forming the linear material 1 into a design shape may be performed.

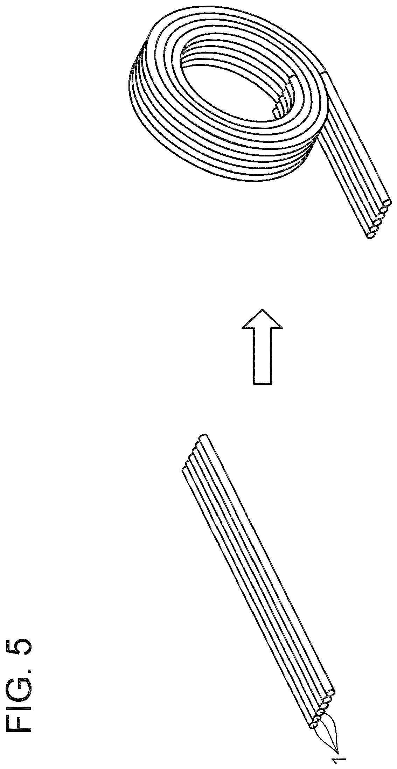

FIG. 5 is a schematic diagram illustrating an example in which the linear materials 1 arranged in a planar manner are formed into a design shape. As illustrated in FIG. 5, in the method for producing the core 2 according to the present disclosed technique, the linear materials 1 arranged in a planar manner may be collectively bent and formed into a design shape, and an excess may be cut.

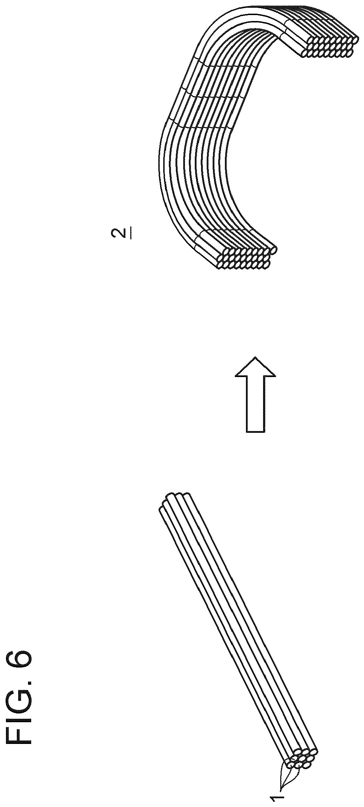

FIG. 6 is a schematic diagram illustrating an example in which the three-dimensionally bundled linear materials 1 are formed into a design shape. As illustrated in FIG. 6, in the method for producing the core 2 according to the present disclosed technique, the three-dimensionally bundled linear materials 1 may be collectively bent and formed into a design shape, and an excess may be cut when there is the excess.

As described above, since the method for producing the core 2 according to the first embodiment includes the above processing steps, the core 2 can be designed into various shapes. In the core 2 produced by the production method according to the first embodiment, generation of an eddy current is suppressed.

For the purpose of suppressing generation of an eddy current, a stacked core in which electromagnetic steel sheets are stacked is conventionally known. In the case of the stacked core, many press dies are required to achieve a complicated shape, and thus cost is high. Since the method for producing the core 2 according to the present disclosed technique uses the linear material 1, it is not necessary to prepare many press dies, and thus there is an advantageous effect that cost is not high. In addition, since the method for producing the core 2 according to the present disclosed technique uses the linear material 1, existing equipment such as a coil winding machine can be used.

The core 2 produced by the production method according to the present disclosed technique can be used in a resolver such as a variable reluctance type resolver, for example, disclosed in JP 2011-239645 A. More specifically, the core 2 produced by the production method according to the present disclosed technique can be used as a magnetic member of a resolver. As illustrated in FIG. 2 and the like of JP 2011-239645 A, the magnetic member of the resolver has a U shape, and is disposed in an annular shape and fixed.

As illustrated on the right side of FIG. 3, in the core 2 produced by the production method according to the present disclosed technique, the linear material 1 is cut at a portion where the core 2 does not need to be insulated from the outside.

The core 2 produced by the production method according to the present disclosed technique can also be used for a rotary device such as a motor. It is conceivable to produce a rotary device having the same magnetic circuit structure as the resolver. Because a magnetic force generated by the rotary device is larger than a magnetic force detected by the resolver, the core 2 is required to have a larger thickness.

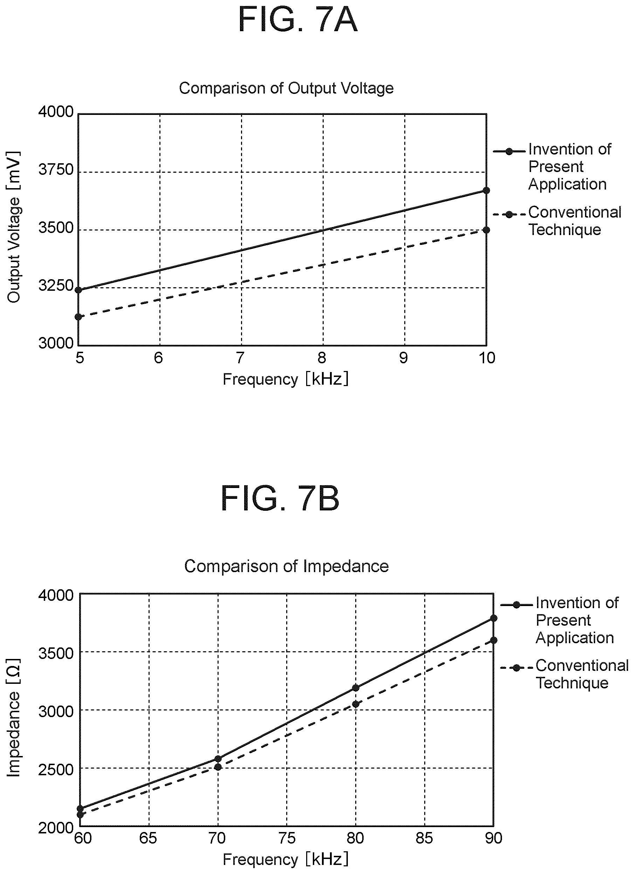

FIG. 7A is an example of a graph comparing an output voltage of a rotary device according to a conventional technique and an output voltage of a rotary device according to the present disclosed technique. FIG. 7B is an example of a graph comparing an impedance of the rotary device according to the conventional technique and an impedance of the rotary device according to the present disclosed technique. As illustrated in FIG. 7A, the rotary device using the core 2 according to the present disclosed technique has a larger output voltage particularly in a frequency band of 5 to 10 [kHz] than the rotary device using the conventional core. In addition, as illustrated in FIG. 7B, the rotary device using the core 2 according to the present disclosed technique has a larger impedance particularly in a frequency band on a frequency side higher than 60 [kHz] than the rotary device using the conventional core.

As described above, the method for producing the core 2 according to the present disclosed technique can be applied to various shapes, and therefore can also be applied to a rotary device such as a motor.

### Second Embodiment.

A core 2 and a method for producing the core 2 according to a second embodiment are modifications of the core 2 and the method for producing the core 2 according to the present disclosed technique.

The same reference numerals as those used in the first embodiment are used as reference numerals used in the second embodiment unless otherwise specified. In the second embodiment, description overlapping with the first embodiment is appropriately omitted.

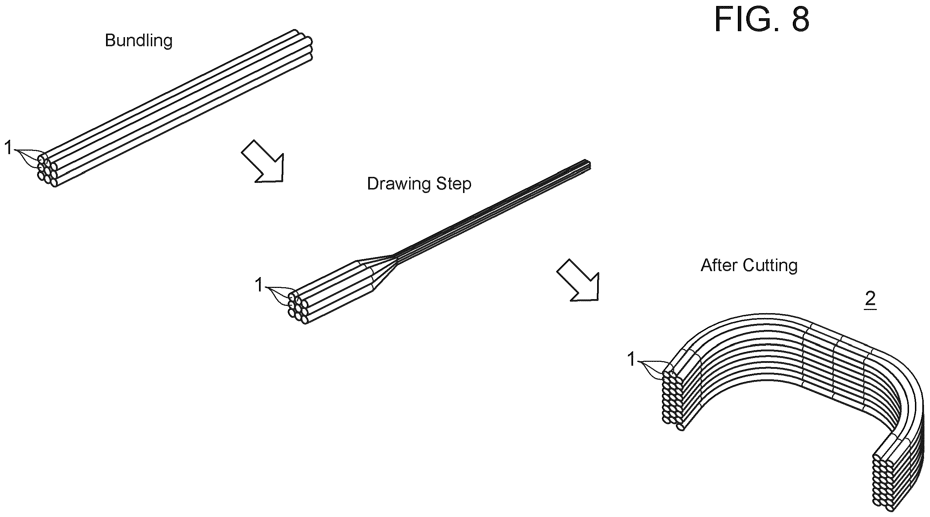

FIG. 8 is a diagram for explaining a wire drawing step in the method for producing the core 2 according to the second embodiment. As illustrated in FIG. 8, the method for producing the core 2 according to the second embodiment may include the wire drawing step. More specifically, as for a specific example of the step (ST4) of forming the linear material 1 into a design shape, the method for producing the core 2 according to the second embodiment may perform a "bundling step" of bundling a plurality of the linear materials 1 and a "wire drawing step" of drawing the bundled linear materials 1, and then may form the bundled and drawn linear materials 1 into a design shape.

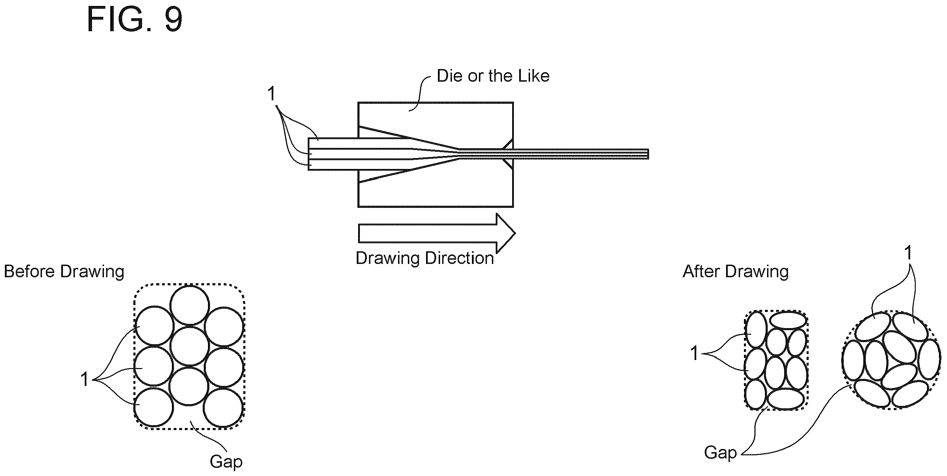

FIG. 9 is an explanatory diagram illustrating a change in a cross-sectional shape of the linear material 1 before and after the wire drawing step in the method for producing the core 2 according to the second embodiment.

Forming the core 2 with the thin linear material 1 increases a surface area of the linear material 1 in the core 2, and has an advantageous effect that a skin effect is increased. The skin effect is a phenomenon in which when an alternating current flows through a conductor, a current density is high at a surface of the conductor and is low at a distance from the surface.

As illustrated in FIG. 9, in the wire drawing step, it is only required to perform drawing on the bundled linear materials 1 using a die as a tool. As illustrated in FIG. 9, the shape of an opening of the die, that is, the shape of the bundled linear materials 1 after drawing may be a circle or a quadrangle. The shape of the bundled linear materials 1 after drawing is preferably a shape that can be formed without gaps in a step of forming the bundled and drawn linear materials 1 into a design shape.

It is also conceivable that drawing using a die is performed for each of the linear materials 1, and then the linear materials 1 are bundled or formed into a design shape. However, by bundling the plurality of linear materials 1 and performing drawing in units of the plurality of bundled linear materials 1, a gap between the linear material 1 and the linear material 1 can be reduced and a space factor can be increased as compared with a case where drawing is performed for each of the linear materials 1.

Formation of the core 2 with the bundled and drawn linear materials 1 may be performed on the entire core 2 or may be performed partially on a specific portion of the core 2.

As described above, since the method for producing the core 2 according to the second embodiment includes the above processing steps, in addition to the effect described in the first embodiment, there is an advantageous effect that a surface area of the linear material 1 in the core 2 is increased and a skin effect is increased.

### INDUSTRIAL APPLICABILITY

The method for producing the core 2 according to the present disclosed technique can be used for a magnetic sensor such as a resolver, a rotary device such as a motor, and another product having a magnetic circuit, and has industrial applicability.

### REFERENCE SIGNS LIST

1: linear material, 2: core

## Claims

1. A method for producing a core to be used in a manner of arranging a plurality of the cores in an annular shape, the method comprising:
bending a linear material that is a magnetic material;
forming the linear material into a design shape; and
cutting an excess of the linear material when there is the excess.

2. The method for producing a core according to claim 1, wherein
the linear material is coated, and
the method further comprises heating and self-fusing the linear material.

3. The method for producing a core according to claim 1, further comprising bonding the linear material with an adhesive.

4. The method for producing a core according to claim 1, further comprising adding silicon to the linear material by a CVD method.

5. The method for producing a core according to claim 1, wherein
the design shape is a shape including a plurality of cores.

6. The method for producing a core according to claim 1, wherein
in the formation into the design shape, the linear material is stacked in a direction of a magnetic flux of a magnetic circuit in which a core is incorporated.

7. The method for producing a core according to claim 1, wherein
the linear material is cut at a portion where the core does not need to be insulated from an outside.

8. A core to be used in a manner of arranging a plurality of the cores in an annular shape, the core being formed by:
bending a linear material that is a magnetic material;
forming the linear material into a design shape; and
cutting an excess of the linear material when there is the excess.

9. The core according to claim 8, wherein
the linear material is coated, and
the core is formed by heating and self-fusing the linear material.

10. The core according to claim 8, wherein the linear material is bonded with an adhesive.

11. The core according to claim 8, wherein silicon is added to the linear material by a CVD method.

12. The core according to claim 8, wherein the linear material is stacked in a direction of a magnetic flux of a magnetic circuit in which the core is incorporated.

13. The core according to claim 8, wherein the cutting is performed at a portion that does not need to be insulated from an outside.
